Europäisches Patentamt

European Patent Office

Office européen des brevets

(11) Veröffentlichungsnummer: **0 368 181**
**A1**

## (12) EUROPÄISCHE PATENTANMELDUNG

(21) Anmeldenummer: **89120442.2**

(22) Anmeldetag: **04.11.89**

(51) Int. Cl.5: **C03C 4/18, H01M 8/12**

(30) Priorität: **08.11.88 DE 3837814**

(43) Veröffentlichungstag der Anmeldung:
**16.05.90 Patentblatt 90/20**

(84) Benannte Vertragsstaaten:
**AT CH DE FR GB IT LI**

(71) Anmelder: **MTU MOTOREN- UND TURBINEN-UNION FRIEDRICHSHAFEN GMBH**
**Olgastrasse 75 Postfach 20 40**
**D-7990 Friedrichshafen 1(DE)**

(72) Erfinder: **Lemoine, Joseph, Dr.**
**Grünlandweg Nr. 7**
**D-7990 Friedrichshafen 5(DE)**

(54) **Material zur Leitung von Protonen.**

(57) Die Erfindung betrifft ein amorphes Material zur Leitung von Protonen auf der Basis von Kaliumhydrodisilikat, das Oxometallate, zwei- und dreiwertige Metallionen und einen Überschuß von Siliziumdioxid enthält und sich zum Einsatz in Brennstoffzellen eignet.

EP 0 368 181 A1

## Material zur Leitung von Protonen

Die Erfindung betrifft ein Material mit amorpher Struktur auf der Basis von Kaliumhydrodisilikat.

Soweit solche Materialien als Gläser vorliegen, werden sie bei Temperaturen in der Nähe ihres Erweichungspunktes elektrolytisch leitend, so daß beim Anlegen eines elektrischen Feldes Metall- und Wasserstoffionen durch das Material wandern. Nachteile derartiger elektrolytisch leitender Gläser sind hohe Betriebstemperaturen, Forminstabilität, mit dem Stromfluß verbundene Materialveränderungen durch Metallionenwanderung und Bildung von elektronisch leitenden Bereichen durch Metallausscheidungen.

Kristalline Materialien zur ausschließlichen Leitung von Protonen sind aus der Druckschrift "Proton Conduction and Injection Solids, Chemical Reviews, 1975, Nr. 1, Seite 21 bis 65" bekannt. Ihre Protonenleitfähigkeit von $10^{-15}$ bis $10^{-4}$ $cm^{-1}$ (vergl. S. 24, Chem. Rev., 1975, Nr. 1) ist jedoch für technische Anwendungen wie Brennstoffzellen zu gering. Weitere Nachteile bilden die hohen Betriebstemperaturen und die kristalline Struktur sowie die damit verbundene Anisotropie der Protonenleitfähigkeit.

Aufgabe der Erfindung ist es ein gattungsgemäßes Material, das einen geeigneten Protonenleiter für Brennstoffzellen darstellt, und das eine isotrope Protonenleitfähigkeit von mehr als $10^{-4}$ S x $cm^{-1}$ aufweist, und ein Verfahren zu seiner Herstellung anzugeben.

Gelöst wird diese Aufgabe in bezug auf das Material dadurch, daß es neben Kaliumhydrodisilikat Oxometallate bis zu einem Molverhältnis von 1:5 enthält und daß Dotierelemente der dritten Gruppe des periodischen Systems bis zu 50 mol % anstelle von Siliciumionen eingebaut und daß bis zu 50 Mol % der Kaliumionen durch zweiwertige Metallionen annähernd gleichen Ionenradius ersetzt und daß bis zu 400 mol % Siliciumdioxyd enthalten sind.

Dieses Material hat die Vorteile, daß es andere Ionenleitungen, außer Protonenleitung unterdrückt, daß seine elektronische Leitfähigkeit vernachlässigbar gering ist und es im oberflächennahen Bereich Elektronen abblockt.

Das erfindungsgemäße Material basiert auf Kaliumhydrodisilikat, da Kaliumhydrodisilikat in der Lage ist, ein Glas mit kettenförmiger Molekularstruktur zu bilden und da es zur Wasserstoffbrückenbildung neigt. Die Silikatketten werden mit Elementen der dritten Gruppe des periodischen Systems bis zu 50 mol % vorzugsweise von 2 mol % bis 30 mol % anstelle der Siliciumionen dotiert, so daß Wasserstoffleerstellen bei der Wasserstoffbrückenbildung entstehen. Durch die Erhöhung der Wasserstoffleerstellen wird die Leerstellendiffusion von Wasserstoffionen verbessert und damit die Protonenleitfähigkeit vorteilhaft erhöht.

In einer besonders vorteilhaften Ausbildung der Erfindung werden als Dotierelement bis zu 15 mol % der Siliciumionen Aluminiumionen eingebaut, die im oberflächennahen Bereich eine wasserhemmende Schicht bilden, während sie im Volumen die Protonenleitfähigkeit erhöhen.

In einer weiteren bevorzugten Ausbildung der Erfindung werden als Dotierelement Borionen eingebaut, die vorteilhaft auch in hoher Konzentration keine kristallinen Aussscheidungen bilden und gleichzeitig die Betriebstemperatur vorteilhaft herabsetzen.

Ein wesentliches Merkmal der Erfindung ist der Zusatz von Oxometallaten bis zu einem Molverhältnis von 1:5 vorzugsweise von 1:1 bis 1:3 zwischen Kaliumhydrodisilikat und Oxometallaten, was vorteilhaft die Protonenleitfähigkeit des Materials verbessert, da stark polarisierbare kovalent gebundene anionische Polymerketten mit den dotierten Silikat-Ketten in die amorphe Struktur eingebaut werden.

Vorzugsweise werden Oxometallate der Übergangsmetalle eingesetzt, da diese eine Erhöhung der Protonenleitfähigkeit um mehr als eine Zehnerpotenz bewirken. Aus dieser Gruppe haben sich Titanate, Vanadate, Chromate, Zirkonate, Niobate, Molybdate, Hafnate, Tantalate und Wolframate als besonders geeignet erwiesen.

Bei dem Einsatz des erfindungsgemäßen Material es in wasser- oder wasserdampfhaltiger Umgebung, wie es in Brennstoffzellen vorliegt, ist die Wasserunlöslichkeit des Materials entscheidend. Zur Erhöhung der Wasserfestigkeit des Materials wird vorteilhaft bis zu 50 mol % vorzugsweise von 5 mol % bis 20 mol % der Kaliumionen durch zweiwertige Metallionen annähernd gleichen Ionenradiuses ersetzt.

Vorzugsweise werden Bariumionen anstelle von Kaliumionen von 5 bis 20 mol der Kaliumionen eingesetzt, da Bariumionen einen besonders guten Schutz gegen Eindringen von und Zersetzen des Materials durch Wassermoleküle darstellen.

Um andererseits keine Wassermoleküle, die zur Wasserstoffbrückenbildung während des Prozesses der Glasbildung erforderlich sind, zu verlieren, wird ein erhöhter Druck von 20 bis 400 bar vorzugsweise 70 bis 300 bar während der Glasbildung bei Temperaturen zwischen 500 und 800 °C vorzugsweise zwischen 550 und 700 °C aufgeprägt.

Die Vorteile derartiger wasserfester protonenleitender Gläser liegen in der besonderen Eigenschaft, daß eine elektronische Leitung sowohl an der Oberfläche als auch im Volumen der Gläser unterbunden ist, so daß eine auf hoher Protonenleitung basierende, kleinvolumige Brennstoffzelle realisiert werden kann. Dazu wird das erfindungsgemäße protonenleitfähige Glas vorzugsweise auf ein stützendes Substrat als amorpher Film von 5 bis 150 μm Dicke mit einem speziellen Herstellungsverfahren aufgetragen.

In einer bevorzugten Ausführungsform erreicht dieser amorphe Film eine Protonenleitfähigkeit von mindestens $10^{-2}$ S cm$^{-1}$ bei einer Betriebstemperatur von 200 °C.

Die Aufgabe, ein Verfahren zur Herstellung des Materials gemäß Anspruch 1 bis 6 anzugeben, wird erfindungsgemäß durch die im Kennzeichnungsteil des Patentanspruchs 7 und vorzugsweise des Patentanspruchs 8 angegebenen Verfahrensschritte gelöst.

Dieses Verfahren hat den Vorteil, daß eine glasbildende Suspension direkt auf einem Substrat in eine protonenleitende Glasschicht bei Temperaturen von 500 bis 800 °C und Drücken von 20 bis 400 bar vorzugsweise bei Temperaturen zwischen 550 und 700 °C und bei einem Druck von 70 bis 300 bar umgewandelt wird, so daß die geometrisch günstige Form einer protonenleitenden Glasplatte ohne zerspanende Trenntechniken und Schleif- oder Polierarbeiten entsteht.

Bildet das Substrat in einer bevorzugten Ausführungsform ein poröses Elektrodenmaterial einer Brennstoffzelle, das vorzugsweise eine platinierte Sintermetallplatte auf der Basis von beispielsweise Kupfer ist so kann es vorteilhaft ohne Zwischenbehandlung mit der erfindungsgemäßen protonenleitenden Glasschicht als aktive Trennwand in Brennstoffzellen eingesetzt werden.

Ist das Substrat als Elektrodenmaterial ungeeignet, so wird in einer weiteren vorteilhaften Lösung das Substrat von der Glasschicht durch beispielsweise Abtragen, Abtrennen, Abspalten oder Abätzen entfernt. Die dabei entstehende freitragende Glasschicht wird beim Erweichungspunkt des Glases beidseitig oder einseitig mit einlagigem oder mehrlagigem Elektrodenmaterial für Brennstoffzellen wie beispielsweise aus einer Lage platiniertem gesintertem Kupfer und einer weiteren Lage gesintertem Platin verpreßt.

Dieses Verpressen wird vorzugsweise in einer beheizbaren Hochdruckanlage unter Wasserdampfatmosphäre durchgeführt, damit die Protonenleitfähigkeit der Glasschicht erhalten bleibt.

Die folgenden Ausführungsbeispiele sollen die Erfindung näher erläutern und geben eine vorteilhafte Zusammensetzung des Materials sowie ein Verfahren zur Herstellung von protonenleitendem Material an.

Ein Material zur Leitung von Protonen auf der Basis von Kaliumhydrodisilikat setzt sich beispielsweise aus folgenden Bestandteilen zusammen:
22,4 mol % Kaliumhydrodisilikat
32,2 mol % Dikaliumdititanat
32,2 mol % Siliciumdioxid
3,6 mol % Aluminiumoxid
9,6 mol % Bariumoxid.

Zur Herstellung eines Materials zur Leitung von Protonen wird beispielsweise zunächst eine Suspension aus einer Kali-Wasserglas-Lösung mit folgenden mol-Anteilen von fein pulverisierten Oxiden und Hydroxiden pro 100 Liter Wasser angesetzt:
86,8 mol Kaliumhydroxid
77,2 mol Siliciumdioxid
64,4 mol Titandioxid
3,6 mol Aluminiumoxid
9,6 mol Bariumhydroxid.

Anschließend wird die Suspension auf ein metallisches Substrat aufgetragen. Danach wird das beschichtete Substrat in einer beheizbaren Hochdruckanlage auf 600 °C erhitzt und unter Wasserdampf mit einem Druck von 120 bar beaufschlagt.

Nach erfolgter Glasbildung wird das metallische Substrat abgeätzt und die selbsttragende protonleitende Glasschicht von ca. 100 μm Dicke auf ein poröses Elektrodenmaterial für Brennstoffzellen verbracht und in einer beheizbaren Hochdruckanlage bis zum Erweichungspunkt der Glasschicht unter einem Druck von 300 bar bei Wasserdampfatmosphäre aufgeheizt. Nach Entnahme des protonenleitenden Materials aus der Hochdruckanlage zeigt das Material eine Protonenleitfähigkeit von 2 bis 3 • $10^{-2}$ S cm$^{-1}$.

## Ansprüche

1. Material mit amorpher Struktur auf der Basis von Kaliumhydrodisilicat, dadurch gekennzeichnet, daß es neben Kaliumhydrodisilicat Oxometallate bis zu einem Molverhältnis von 1:5 enthält und daß Dotierelemente der dritten Gruppe des Periodischen Systems bis zu 50 mol % anstelle von Siliciumionen eingebaut und bis zu 50 mol % der Kaliumionen durch zweiwertige Metallionen annähernd gleichen Ionenradius ersetzt und zusätzlich bis zu 400 mol % Siliciumdioxid enthalten sind.

2. Material nach Anspruch 1, dadurch gekennzeichnet, daß die Metallionen der Oxometallate Übergangsmetalle, vorzugsweise Titanate, Vanadate, Chromate, Zirkonate, Niobate, Molybdate, Hafnate, Tantalate oder Wolframate sind.

3. Material nach Anspruch 1 oder 2, dadurch gekennzeichnet, daß das Dotierelement Aluminium ist und bis zu 15 mol % der Siliciumionen ersetzt.

4. Material nach Anspruch 1 oder 2, dadurch gekennzeichnet, daß das Dotierelement Bor ist und bis zu 50 mol % der Siliciumionen ersetzt.

5. Material nach einem oder mehreren der Ansprüche 1 bis 4, dadurch gekennzeichnet; daß als Ersatz der Kaliumionen Bariumionen in die amorphe Struktur eingebaut werden.

6. Material nach einem oder mehreren der Ansprüche 1 bis 5, dadurch gekennzeichnet, daß das Molverhältnis zwischen Kaliumhydrodisilikat, Oxometallaten, Dotierelementen, zweiwertigen Metallionen und Siliciumdioxid in den angegebenen Grenzen derart eingestellt wird, daß das Material eine Protonenleitfähigkeit von über $10^{-2}$ S cm$^{-1}$ bei einer Betriebstemperatur von 200 °C aufweist.

7. Verfahren zur Herstellung eines Materials nach einem oder mehreren der Ansprüche 1 bis 6, das durch folgende Verfahrensschritte gekennzeichnet ist:

a) Herstellung einer Suspension aus einer Kali-Wasserglas-Lösung und fein verteiltem Pulver in einer auf ein mol Kaliumhydrodisilikat bezogenen Zusammensetzung von
0 bis 5 mol Oxometallat oder Oxometallatbildnern
0 bis 0,5 mol eines 3wertigen Metallions in oxidischer Bindung oder als Anion eines Salzes mit annähernd gleichem Ionenradius wie das Siliciumion,
0 bis 0,5 mol eines 2wertigen Metallions als Oxid oder Hydroxid oder Anion eines Salzes mit annähernd gleichem Ionenradius wie das Kaliumion und
0 bis 4 mol Siliciumdioxid, wobei die Untergrenze bei zwei Bestandteilen 0 sein kann.

b) Auftragen der Suspension auf ein Substrat.

c) Erhitzen der Suspension und des Substrats in einer Hochdruckanlage auf Temperaturen zwischen 500 und 800 °C bei einem Druck von 20 bis 400 bar zu einer protonenleitenden Glasschicht mit Substrat.

8. Verfahren zur Herstellung eines Materials nach einem oder mehreren der Ansprüche 1 bis 6, das durch folgende Verfahrensschritte gekennzeichnet ist:

a) Herstellung einer Suspension aus einer Kali-Wasserglas-Lösung und fein verteiltem Pulver in einer auf ein mol Kaliumhydrodisilikat bezogenen Zusammensetzung von
1 bis 3 mol Oxometallat oder Oxometallatbildner,
0,02 bis 0,3 mol eines 3wertigen Metallions in oxidischer Bindung oder als Anion eines Salzes mit annähernd gleichem Ionenradius wie das Siliciumion,
0,05 bis 0,2 mol eines 2wertigen Metallions als Oxid oder Hydroxid oder Anion eines Salzes mit annähernd gleichem Ionenradius wie das Kaliumion und
1 bis 3 mol Siliciumdioxid.

b) Auftragen der Suspension auf ein Substrat.

c) Erhitzen der Suspension und des Substrats in einer Hochdruckanlage auf Temperaturen zwischen 550 und 700 °C bei einem Druck von 70 bis 300 bar zu einer protonenleitenden Glasschicht mit Substrat.

9. Verfahren nach Anspruch 7 oder 8, dadurch gekennzeichnet, daß das Erhitzen der Suspension unter Wasserdampf erfolgt.

10. Verfahren nach einem der Ansprüche 7 bis 9, dadurch gekennzeichnet, daß das Substrat ein poröses Elektrodenmaterial einer Brennstoffzelle darstellt.

11. Verfahren nach einem der Ansprüche 7 bis 10, dadurch gekennzeichnet, daß das Substrat nach dem Erhitzen von der Glasschicht entfernt wird.

12. Verfahren nach Anspruch 11, dadurch gekennzeichnet, daß die Glasschicht mit einem porösen Elektrodenmaterial für Brennstoffzellen bei der Erweichungstemperatur der Glasschicht einseitig verpreßt wird.

13. Verfahren nach Anspruch 12, dadurch gekennzeichnet, daß die Glasschicht mehrlagig mit Elektrodenmaterial für Brennstoffzellen verpreßt wird.

14. Verfahren nach Anspruch 11, dadurch gekennzeichnet, daß die Glasschicht mit Elektrodenmaterial für Brennstoffzellen beidseitig verpreßt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 110 571 (MAX-PLANCK-GESELLSCHAFT ZUR FÖRDERUNG DER WISSENSCHAFTEN) * Patentansprüche * ---- | 1,2,7 | C 03 C 4/18 H 01 M 8/12 |
| A | EXTENDED ABSTRACTS, Band 84, nr. 2, Oktober 1984, Seite 241, Zusammenfassung Nr. 159; M. WATANABE et al.: "Ionic Conductivity of Some Alkali-Silicate Glasses * Zusammenfassung * ---- | 1,2,7 | |
| A | CHEMICAL ABSTRACTS, Band 103, Nr. 8, August 1985, Seite 171, Zusammenfassung Nr. 56796b, Columbus, Ohio, US; & JP-A-60 033 254 (INABATA AND CO.) 20-02-1985 * Zusammenfassung * ---- | 1,3 | |
| A | FR-A-2 349 548 (VSESOJUZNOE NAUCHNO-PROIZVODSTVENNOE OBIEDINENIE TSELLJULOZNO-BUMAZHNOI PROMYSHLENNOSTI) * Patentanspruch * ---- | 1,2,3,7 | RECHERCHIERTE SACHGEBIETE (Int. Cl.5) |
| A | US-A-3 107 178 (RINDONE) * Spalte 2, Zeilen 63-71 * ----- | 1,2,4,5,7 | C 03 C H 01 M |

Der vorliegende Recherchenbericht wurde für alle Patentansprüche erstellt

| Recherchenort | Abschlußdatum der Recherche | Prüfer |
|---|---|---|
| DEN HAAG | 02-02-1990 | VAN BOMMEL L. |